# EUROPEAN PATENT APPLICATION

(11) **EP 3 315 765 A2**
(43) Date of publication of application: **02.05.2018**
(21) Application number: 17198403.2
(22) Date of filing: 25.10.2017
(51) Int. Cl.: F02P 3/01, F02P 23/04, H05H 1/52, F02P 3/08, F02P 15/08, F02P 15/02, F02P 9/00

(54) **ELECTROMAGNETIC WAVE OSCILLATION DEVICE INCLUDING BUCK-BOOST CIRCUIT**

(30) Priority: 26.10.2016 JP 2016210034
(71) Applicant: Imagineering, Inc., Kobe-shi, Hyogo 650-0047 (JP)
(72) Inventor: KANBARA, Seiji, Kobe-shi, Hyogo 650-0047 (JP); IKEDA, Yuji, Kobe-shi, Hyogo 650-0047 (JP)
(74) Representative: Haseltine Lake LLP

(57) **Abstract**

An electromagnetic wave oscillation device includes: a buck-boost circuit having buck-boosters and switching elements; an electromagnetic wave oscillator; an amplifier to amplify an electromagnetic wave and supply an amplified electromagnetic wave to a resistive part; a detector to detect a reflected wave from the resistive part; and a controller to send to one of the switching elements an operation signal in predetermined order, synchronizing with an oscillation timing of the electromagnetic wave oscillator, to output a current from the corresponding buck-boosters to the amplifier in a non-smooth manner. When a detected value of the reflected wave exceeds a predetermined value upon said current output by operating the one of the switching elements, the controller stops sending the operation signal to one or more of the other switching elements that are supposed to output the current after said current output by operating the one of the switching elements.

## Description

### TECHNICAL FIELD

The present invention relates to an electromagnetic wave oscillation device for supplying an electromagnetic wave to an ignition device or an electromagnetic wave irradiation antenna.

### BACKGROUND ART

Inventers suggest the ignition device which uses the electromagnetic wave for ignition procedure in the internal combustion engine. For example, the plasma generation device that can be used as the ignition device in small size so as to efficiently perform the plasma generation, expansion, and maintaining by using only the electromagnetic wave, is suggested as the ignition device for forming integrally together the electromagnetic wave oscillator for oscillating the electromagnetic wave, the controller for controlling the electromagnetic wave oscillator, the booster circuit including the resonation circuit capacitively-coupled to the electromagnetic wave oscillator, and the discharge electrode for discharging high voltage generated by the booster circuit (for example, referring to Patent Document 1). The plasma generation device for irradiating the microwave into plasma of the general type ignition plug, maintaining and expanding the plasma is also suggested.

### PRIOR ART DOCUMENTS

### PATENT DOCUMENT(S)

Patent Document 1: WO2014/115707

### SUMARRY OF INVENTION

### PROBLEM TO BE SOLVED BY INVENTION

The electromagnetic wave supplied into the ignition device described in Patent Document 1 is pulse-oscillated from the electromagnetic wave oscillator. The electromagnetic wave oscillated from the electromagnetic wave oscillator has several watts, the electromagnetic wave with several watts is amplified by the amplifier, and then supplied into the ignition device and the electromagnetic wave irradiation antenna. Specifically, DC power, 12V or 24V from power supply, for example, battery in the internal combustion engine is changed into 32V in series by the booster circuit that includes a boosting means such as DC/DC converter, and then 32V is supplied into the electromagnetic wave oscillator and the amplifier. When the electromagnetic wave oscillator receives the electromagnetic wave oscillation signal, for example, TTL signal from the controller, the electromagnetic wave is oscillated in set pattern of predetermined duty ratio, pulse time period, and etc., the electromagnetic wave is amplified up to the predetermined power, for example, 1 kW, by the amplifier applied of high voltage 32V in constant, and then supplied to the ignition device and the electromagnetic wave irradiation antenna. Moreover, there is a case where AC power, for example 100V is changed into 32V in series by the step-down circuit that includes the step-down means such as AC/DC converter, and supplied into the electromagnetic wave oscillator and the amplifier. The buck-boost means includes the boost means and the step-down means, and they are separated in use depending on the power device, the current supply source.

The electromagnetic wave oscillated from the electromagnetic wave oscillator is pulse-oscillated, and therefore, the high voltage of 32V is not required to be applied to the amplifier in constant, and the protection to each device such as the amplifier is not sufficiently achieved. This is a problem in specifications of general buck-boost circuit, and in order to solve such a problem, the inventors suggest the electromagnetic wave oscillation device including the boost circuit that can protect the device by controlling to stop the voltage application to the amplifier when the electromagnetic wave oscillated from the electromagnetic wave oscillator stays in "OFF." The electromagnetic wave oscillation device is configured to be controlled by the controller to output the current in non-smooth manner to the amplifier from a plurality of step-up and down DC-DC converters in predetermined order when the electromagnetic wave oscillator oscillates the electromagnetic wave. Thereby, during non oscillation of the electromagnetic wave from the electromagnetic wave oscillator, the voltage application to the amplifier is stopped, and then, the device protection such as the amplifier and the power saving are achieved.

However, when the current is passed to the amplifier from the plurality of step-up and down DC-DC converters in predetermined order in timing nicely with the oscillation of the electromagnetic wave oscillator, and the reflected wave from the supply destination of the electromagnetic wave oscillated from the electromagnetic wave oscillator (for example, the combustion chamber in the ignition device) is excessively increased, there is a case where the components of the electromagnetic wave oscillation device may be damaged by the reflected wave if the current continues to flow from other step-up and down DC-DC converter during the oscillation timing of the electromagnetic wave oscillator.

The present invention is made from the above viewpoints. It is desirable to provide an electromagnetic wave oscillation device including a buck-boost circuit configured to control to prevent each component of the electromagnetic wave oscillation device from being damaged by the reflected wave caused from the supply destination of the electromagnetic wave oscillated from the electromagnetic wave oscillation device.

### MEANS FOR SOLVING PROBLEM

According to an aspect of the present invention there is provided an electromagnetic wave oscillation device comprising a buck-boost circuit having a plurality of buck-boosters and a plurality of switching elements each provided to one of the buck-boosters, an electromagnetic wave oscillator configured to generate an electromagnetic wave upon input of predetermined voltage, an amplifier configured to amplify the electromagnetic wave from the electromagnetic wave oscillator and supply the amplified electromagnetic wave to a resistive part which outputs the amplified electromagnetic wave, a detector arranged between the amplifier and the resistive part and configured to detect a reflected wave from the resistive part, and a controller configured to control the switching elements of the buck-boosters by sending to one of the switching elements an operation signal in predetermined order at a timing that synchronizes with an oscillation timing of the electromagnetic wave oscillator such that a current from the corresponding buck-boosters is outputted to the amplifier in a non-smooth manner so as to supply the electromagnetic wave from the amplifier to the resistive part. When a value of the reflected wave detected by the detector exceeds a predetermined value upon said current output by operating said one of the switching elements, the controller stops sending the operation signal to one or more of the other switching elements that are supposed to output the current after said current output by operating said one of the switching elements.

According to an aspect of the present invention there is provided an electromagnetic wave oscillation device comprising: a buck-boost circuit having a plurality of buck-boosters and a plurality of switching elements each provided to one of the buck-boosters; an electromagnetic wave oscillator configured to generate an electromagnetic wave upon input of predetermined voltage; an amplifier configured to amplify the electromagnetic wave from the electromagnetic wave oscillator and supply the amplified electromagnetic wave to a resistive part which outputs the amplified electromagnetic wave; a detector arranged between the amplifier and the resistive part and configured to detect a reflected wave from the resistive part; and a controller configured to control the switching elements of the buck-boosters by sending to one of the switching elements an operation signal in predetermined order at a timing that synchronizes with an oscillation timing of the electromagnetic wave oscillator such that a current from the corresponding buck-boosters is outputted to the amplifier in a non-smooth manner so as to supply the electromagnetic wave from the amplifier to the resistive part, wherein when a value of the reflected wave detected by the detector exceeds a predetermined value upon said current output by operating said one of the switching elements, the controller stops sending the operation signal to one or more of the other switching elements that are supposed to output the current after said current output by operating said one of the switching elements.

According to an aspect of the present invention there is provided an electromagnetic wave oscillation device comprising: a buck-boost circuit having a plurality of buck-boosters and a plurality of switching elements each provided to one of the buck-boosters; a controller configured to control the switching elements of the buck-boosters; an electromagnetic wave oscillator configured to generate an electromagnetic wave upon input of predetermined voltage; an amplifier configured to amplify the electromagnetic wave from the electromagnetic wave oscillator and supply the amplified electromagnetic wave to a resistive part which outputs the amplified electromagnetic wave; and a detector arranged between the amplifier and the resistive part and configured to detect a reflected wave from the resistive part; wherein the controller controls sending to one of the switching elements an operation signal in predetermined order at a timing that synchronizes with an oscillation timing of the electromagnetic wave oscillator such that a current from the corresponding buck-boosters is outputted to the amplifier in a non-smooth manner so as to supply the electromagnetic wave from the amplifier to the resistive part, wherein when a value of the reflected wave detected by the detector exceeds a predetermined value upon said current output by operating said one of the switching elements, the controller stops sending the operation signal to one or more of the other switching elements that are supposed to output the current after said current output by operating said one of the switching elements.

The electromagnetic wave oscillation device of the above aspects including the buck-boost circuit is an oscillation device that outputs high voltage to the amplifier in non-smooth manner when the electromagnetic wave oscillator oscillates the electromagnetic wave without arranging a smoothing capacitor for example an electrolytic capacitor at the buck-boost means, and stops the operation of the buck-boost means for outputting current after when the reflected wave value exceeds over the predetermined value.

In this case, the controller functions also as the control for the electromagnetic wave oscillator.

### EFFECT OF THE ABOVE ASPECTS

According to an electromagnetic wave oscillation device including a buck-boost circuit of the above aspects, a device such as an amplifier can sufficiently be protected, since the voltage application to the amplifier can be stopped during no oscillation of an electromagnetic wave from an electromagnetic wave oscillator. Moreover, since it is configured that the voltage is outputted from a plurality of buck-boost means in predetermined order, energy from power source can sufficiently be stored at an inductor of each buck-boost means, while no sooner stops an operation signal sending to a switching element of the buck-boost means than an amplifier operation can be stopped because of no need of arranging a smoothing capacitor for example an electrolytic capacitor at the buck-boost means.

### BRIEF DESCRIPTION OF FIGURES

Fig. 1 is a view of a boost circuit (boosting means) of an electromagnetic wave oscillation device including a buck-boost circuit of the present invention.
Fig. 2 is the view of a voltage step-down circuit (voltage step-down means) of the electromagnetic wave oscillation device including said buck-boost circuit.
Fig. 3 is a graph for showing an ON/OFF pattern of a switching element of the buck-boost means in accordance with an electromagnetic wave oscillation pattern of an electromagnetic wave oscillator of the electromagnetic wave oscillation device including said buck-boost circuit.
Fig. 4 is a graph explaining an operation of the switching element when a reflected wave exceeds over a predetermined value, as well as the ON/OFF pattern of the switching element of the buck-boost means in timing nicely with the electromagnetic wave oscillation pattern from the electromagnetic wave oscillator of the electromagnetic wave oscillation device including the buck-boost circuit of the present invention, a resistive part corresponding to the ignition plug.

### EMBODIMENTS FOR IMPLEMENTING THE INVENTION

In below, embodiment of the present invention is described in detail based on figures. Note that, following embodiments are essentially preferable examples, and the scope of the present invention, the application, or the use is not intended to be limited.

### FIRST EMBODIMENT

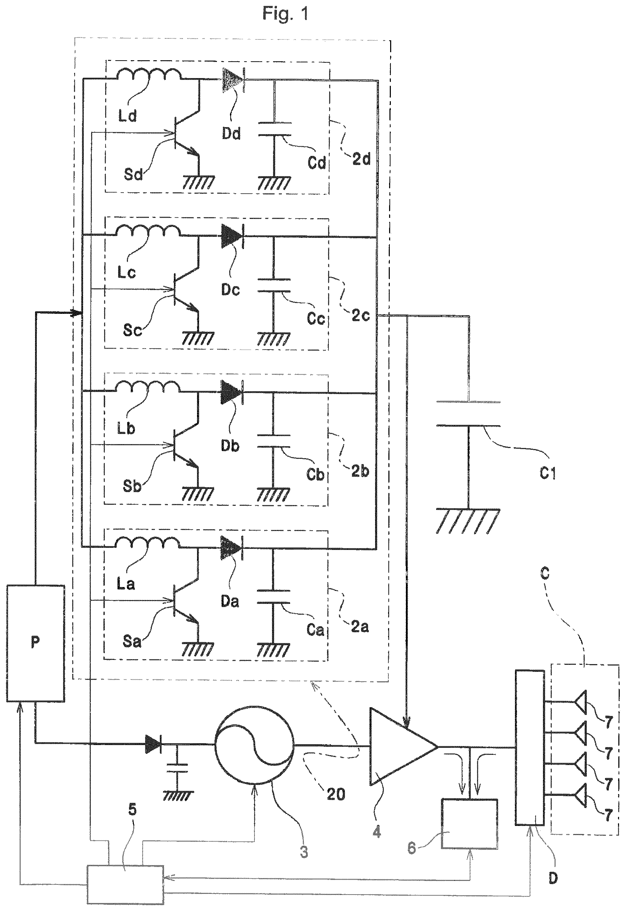

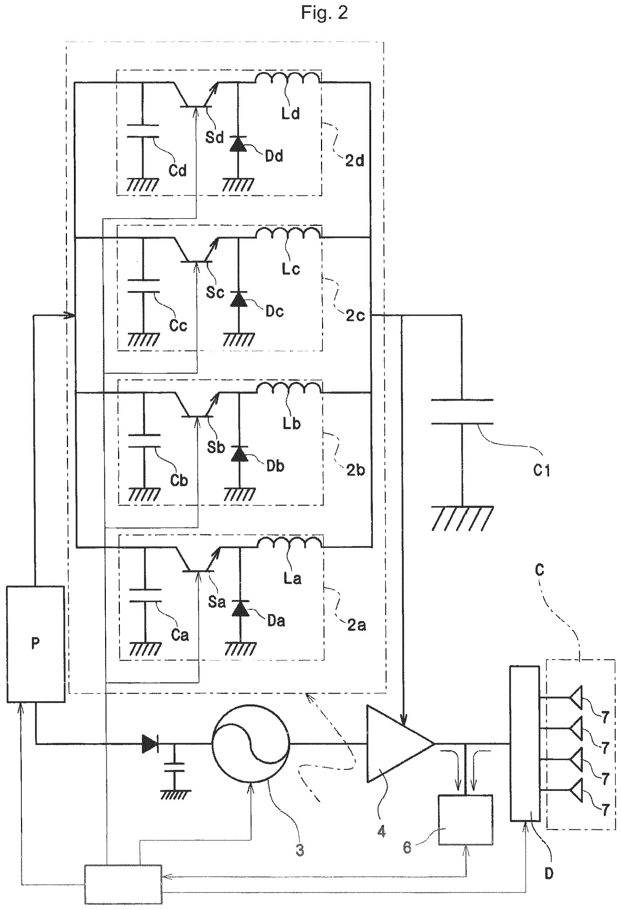

The first embodiment relates to an electromagnetic wave oscillation device including a buck-boost circuit of the present invention. A buck-booster 2 used in the present embodiment can adopt a buck-boost circuit that enables to switch a step-up operation and a step-down operation by controlling the ratio of time which energy is stored in an inductor L; however, in the present embodiment, a boosting means having a boosting circuit shown in Fig. 1 and a step-down means having a step-down circuit shown in Fig. 2 are adopted as the buck-booster 2. The electromagnetic wave oscillation device 1 including the boost circuit in Fig.1 comprises a boost circuit 20 provided with a plurality of boosters 2a, 2b, 2c, and 2d (may refer to "booster 2" in collectively-called, and also similarly handling regarding inductor L, switching element S, diode D, and ceramic capacitor C), a controller 5 configured to control the switching element S of the booster 2, an electromagnetic wave oscillator 3 configured to generate an electromagnetic wave upon input of predetermined voltage, and an amplifier 4 configured to amplify an electromagnetic wave from the electromagnetic wave oscillator 3. The booster 2 is configured to be controlled by the controller 5, when the electromagnetic wave oscillator 3 oscillates, to output the current to the amplifier 4 in non-smooth manner from the plurality of boosters 2a, 2b, 2c, 2d,··· in predetermined order, supply the electromagnetic wave from the amplifier to an resistive part, and when a value of the reflected wave detected by the detector 6 exceeds a predetermined value upon current output by operating one of the switching elements Sb···, the controller 5 stops sending the operation signal to one or more of the other switching elements Sb··· of the buck-boosters 2b··· that are supposed to output the current after said current output by operating said one of the switching elements Sb··· of the buck-booster 2a.

The oscillation from the electromagnetic wave oscillator 3 is mainly pulse-oscillated in the present embodiment; however, if outputted in CW, continuous wave, it can be coped with outputting current from each of the plurality of boosters 2a, 2b, 2c, 2d,··· for predetermined time period, every one microsecond in order for example without interruption. Moreover, the controller 5 preferably functions as the control for the switching element S, as well as the control for the electromagnetic wave oscillator 3.

The number of the buck-booster 2 constituting the buck-boost circuit 20 is, if multiple, it is not limited specifically, and in the present embodiment, four buck-boosters 2 are provided with. The resistive part that becomes the supply destination of the electromagnetic wave amplified by the amplifier 4 is for example an electromagnetic wave spark plug that enhances the potential difference between the discharge electrode and the ground electrode by boosting the electromagnetic wave so as to cause the discharge. In that case, 12V, the battery of the internal combustion engine, for example, passenger vehicle is boosted to 32V. The booster, similarly to known booster, includes the inductor L for storing energy from the power source P, for example, AC power source by turning "ON" of the switching element S connected at right side of the inductor L in figure. Then, by turning "OFF" of the switching element S, the current in high voltage is flown into the high voltage amplifier 4 side via diode D.

The resistive part being the supply destination of the electromagnetic wave that adopts a step-down circuit is for example a microwave oven or a microwave-assist LIBS measurement device for irradiating the electromagnetic wave to plasma of the LIBS measurement device, and 50V current is step-downed into 32V for example.

The capacitor constituting the buck-booster 2 in the present embodiment, is not the smoothing capacitor for smoothing the output current utilized in known buck-booster, for example, the electrolytic capacitor with large capacitance of 10 µF above, but the ceramic capacitor C about 0.5µF for merely eliminating noise. Therefore, the providing of the ceramic capacitor C can be omitted in a case where there is no worry that transient noise by stray capacitance inside the buck-boost circuit 2 including the buck-booster 2 occurs at the amplifier 4 being an output side. Moreover, the current on the timing of a peak appearance at a rise of waveform outputted from the electromagnetic wave oscillator 3 can be enhanced and strengthened by arranging capacitor C1 as shown in figure. Thereby, a delay time from the beginning of the signal application approached up to a fixed value of the current value can be close to "zero" as quickly as possible; however, in a case where the delay time at the peak appearance at the rise does not become a significant problem, the providing of the capacitor C 1 can be omitted.

The electromagnetic wave oscillator 3 is supplied of predetermined voltage in constant, for example 12V, from AC power source P. When the electromagnetic wave oscillator 3 receives the electromagnetic wave oscillation signal, for example, TTL signal, from the controller 5, it outputs the electromagnetic wave in set pattern of a predetermined duty ratio, pulse time period and etc., microwave at 2.45GHz, for example. The numeral symbol "30" means the smoothing circuit for the current supplied to the electromagnetic wave oscillator 3. Moreover, the current supply to the electromagnetic wave oscillator 3 is not performed directly from AC power source P, but may be performed from the buck-boost circuit 20.

The amplifier 4 amplifies the electromagnetic wave about several watts outputted from the electromagnetic wave oscillator 3 up to several kW, and then supplies the amplified electromagnetic wave to the ignition device and the electromagnetic wave irradiation antenna. The electromagnetic wave outputted from the electromagnetic wave oscillator 3 can be oscillated in CW, but in the present embodiment, the pulse oscillation output system is adopted. In the general amplifier, the current is always applied from the buck-booster 2 regardless of signal output manner from the electromagnetic wave oscillator 3, i.e., CW or pulse; however, in the present embodiment, the output is performed on the timing synchronizing with the pulse output from the electromagnetic wave oscillator 3. Then, the electromagnetic wave, for example, 2.45 GHz microwave amplified by the amplifier 4, is outputted to the supply destination, the resistive part, i.e., spark plug and electromagnetic wave irradiation antenna 7. In that timing, if there is a plurality of supply destinations, the irradiated electromagnetic waves are distributed via distributor "D." "C" means "cavity" into which the electromagnetic wave is irradiated, the cavity C falls into the combustion chamber in the internal combustion chamber, and falls into the heating room in the microwave oven.

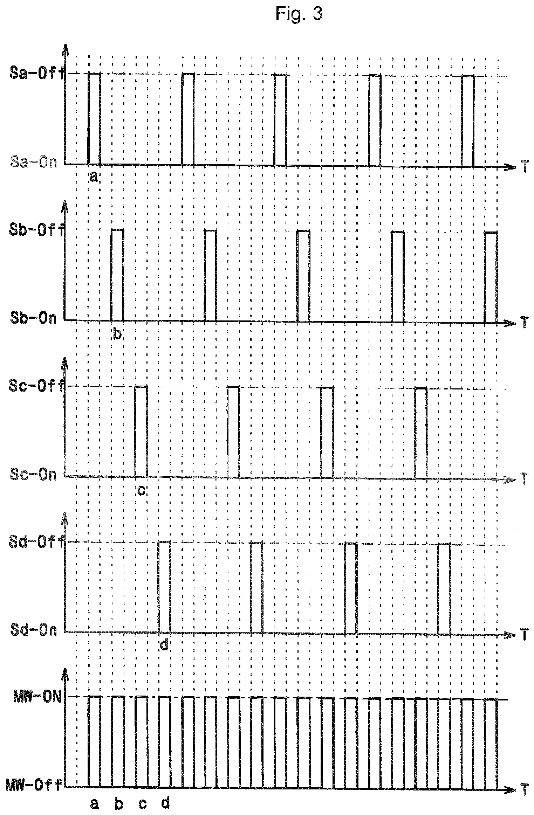

The voltage applied to the amplifier 4, as illustrated in Fig. 3, is matched to an electromagnetic wave oscillation pattern of the electromagnetic wave oscillator 3, only the switching element "Sa" becomes to be "Off" with respect to first pulse oscillation "a", voltage supplied from AC power source "P" for example 12V is boosted into 32V for example, so as to apply the voltage from the buck-boost circuit 20. Then, only the switching element "Sb" becomes to be "Off" with respect to second pulse oscillation "b", voltage is applied from the buck-boost circuit 20, and the same way as above is repeated with regard to pulse oscillation "c" and "d". When the "Off" time period of each switching element "S" is much longer with respect to the voltage supplied from AC power source "P", the adjustment is performed by "On" time period of each switching element "S". Note that, the timing of the high voltage application to the amplifier 4 is preferably controlled in somewhat, i.e., several microseconds or several nanoseconds earlier than the timing of the electromagnetic wave oscillation from the electromagnetic wave oscillator 3.

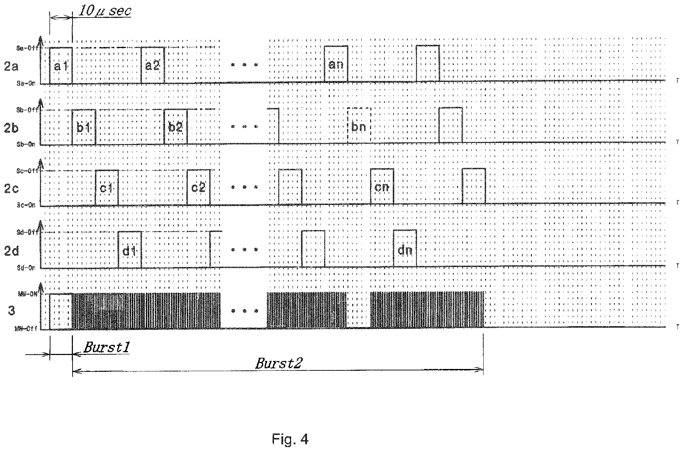

Moreover, in a case where the time interval oscillated from the electromagnetic wave oscillator 3 is short, specifically, in a case of a spark plug that causes ignition only by the electromagnetic wave, as illustrated in Fig. 4, the electromagnetic wave is oscillated from five microsecond to fifteen microsecond, for ten microsecond in the present embodiment as first "Burst" (Burst 1) in order to generate an initial plasma, then after pausing about 0.1 microsecond, the electromagnetic wave is oscillated as the second "Burst" (Burst 2) in that the oscillation of the cycle of 0.1 microsecond "ON", 0.9 microsecond "OFF" and duty cycle 10% per microsecond is repeated from 350 to 700 times. In this case, the voltage is required to be applied to the amplifier 4 by one time ignition for about 715 microsecond at largest of the electromagnetic wave; however, in a case of a four-stroke internal combustion engine, for example, the engine speed having 2,400 rpm, two times piston reciprocation takes 500 millisecond, and the electromagnetic wave oscillation time period is no more than 0.2% of total. Moreover, if constituted of the electromagnetic wave supply to the four-stroke internal combustion engine by using the distributor D, the electromagnetic wave oscillation time period is no more than 1% of total. Therefore, in the case where the electromagnetic wave is supplied to the spark plug for about 715 microsecond at largest at the duty cycle 10% by the above only one time ignition, it is controlled to apply the current to the amplifier 4 during 715 microsecond, for example, every ten microsecond in series from the plurality of boosters 2 without interruption. Even if performing such a control, the ratio of current application to the amplifier 4 is less than 1% of the total operation time, and the heat-up of the components can be reduced by electricity consumption reduction. Accordingly, the current output from the buck-boost circuit 2 is not required to synchronize completely with the electromagnetic wave oscillation.

In the present embodiment, the electromagnetic wave is oscillated from the electromagnetic wave oscillator 3, amplified in the amplifier 4, supplied the amplified electromagnetic wave to the resistive part (for example, electromagnetic wave spark plug 7 that causes the discharge between electrodes by boosting the electromagnetic wave by the booster), and a reflected wave from the resistive part is detected by a detector 6. When a detected value exceeds over the predetermined value, that is, when the reflected wave value detected by the detector 6 exceeds over the predetermined value on the timing of the current output by one buck-booster 2a, for example, the reflected wave occupying ratio 60%, preferably 70% or above, the operation signal sending to the switching element Sb, Sc of the buck-booster 2b, 2c that are programmed to output the current after the current output of one buck-booster 2a is controlled to stop (the switching element not being "OFF."). In the present embodiment, the operation signal sending to the switching element Sb of the buck-booster 2b after one time of the buck-booster 2a is stopped, and the supply of the electromagnetic wave oscillated from the electromagnetic wave oscillator 3 to the resistive part is controlled to stop for ten microseconds.

Specifically, as illustrated in Fig. 4, when the reflected wave exceeds over the predetermined value on the output timing of current "an" outputted from the buck-booster 2a, one of all, the current "bn" of the next prearranged for output, the buck-booster 2b is stopped to output. In that case, the current "cn" of the further next prearranged for output, the buck-booster 2c can also be stopped to output. Following the buck-booster at which the reflected wave exceeds over the predetermined value, how many buck-boosters should stop is not specifically limited, and it can be decided based on the reflected wave value. That is, in a case where the reflected wave value is between more than 60% and less than 70%, it can be set to one time stop, in a case where the reflected wave value is between more than 70% and less than 80%, it can be set to two times stop, and in a case where the reflected wave value is more than 80%, it can be set to three times stop.

As above, since the high voltage becomes outputted in non-smooth manner to the amplifier 4 by using the plurality of buck-boosters 2 in predetermined order, energy from AC power source P can sufficiently be stored in each inductor L of buck-boosters 2, stable voltage can be applied to the amplifier 4 only when necessary, and the electromagnetic wave oscillation device can be controlled suitably. Then, in the present embodiment, when the current supply to the amplifier 4 is stopped because of exceeded over the predetermined value of the reflected wave of the electromagnetic wave that is supplied to the resistive part on the timing of the current output by one of buck-boosters 2, a rapid response can be performed since a capacitor having a large capacity is not arranged in each buck-booster 2, and the damage of each component caused by the reflective wave can effectively be prevented.

### <EFFECT AS ELECTROMAGNETIC WAVE OSCILLATION DEVICE INCLUDING BUCK-BOOST CIRCUIT FOR INTERNAL COMBUSTION ENGINE>

When the electromagnetic wave oscillation device 1 including the buck-boost circuit of the present invention is used as an electromagnetic wave oscillation device for supplying the electromagnetic wave to an ignition device for an internal combustion engine, the following effect as well as the above-mentioned effect can be obtained.

When the electromagnetic wave is supplied to an ignition device using only the electromagnetic wave or an electromagnetic wave irradiation antenna that supplies the electromagnetic wave to the conventionally-used spark plug of the internal combustion engine, it is preferable that the electromagnetic wave oscillation device is arranged at each cylinder from the viewpoint of, for example, heat release from the semiconductor of the electromagnetic wave oscillator 3, and in the conventional constitution that the voltage is always applied to the amplifier 4, there is a case where the electromagnetic wave oscillator 3b that has no need of oscillation may be operated for oscillation caused by some of noises occurring on the operation of electromagnetic wave oscillator 3a of the electromagnetic wave oscillation device, one of the plurality of electromagnetic wave oscillation devices. In that case, if the voltage continues to apply to the amplifier 4b, there occurs a failure that the electromagnetic wave from malfunctioned electromagnetic wave oscillator 3b is amplified and results in undesirable outputted. However, in the present invention, since the electromagnetic wave oscillation device 1 including the buck-boost circuit does not apply the voltage to the amplifier 4b corresponding to the malfunctioned electromagnetic wave oscillator 3b, such a failure does not occur. Moreover, since the electromagnetic wave supply can immediately be stopped based on the reflected wave detection, damage to each component caused of the reflected wave can efficiently be prevented.

### INDUSTRIAL APPLICABILITY

As explained, an electromagnetic wave oscillation device including a buck-boost circuit of the present invention is suitably used for oscillation of an electromagnetic wave to an ignition device of an internal combustion engine such as vehicle engine, and an electromagnetic wave irradiation antenna to a spark plug. Moreover, if the electromagnetic wave oscillation device including the buck-boost circuit of the present invention is used for the electromagnetic wave irradiation antenna, it is suitable for use in a device for supplying a microwave to a heating device constituted by a high frequency absorber, a heating device that uses the dielectric heating that is represented by a microwave oven, and a garbage disposer.

### NUMARAL SYMBOLS EXPLANATION

- 1.: Electromagnetic Wave Oscillation Device Including Buck-boost Circuit
- 2.: Buck-booster
- 20.: Buck-boost Circuit
- 3.: Electromagnetic Wave Oscillator
- 4.: Amplifier
- 5.: Controller
- 6.: Detector
- S.: Switching Element
- L.: Inductor
- D.: Diode
- C.: Ceramic Capacitor
- P.: Power Source

## Claims

1. An electromagnetic wave oscillation device comprising:
a buck-boost circuit having a plurality of buck-boosters and a plurality of switching elements each provided to one of the buck-boosters;
a controller configured to control the switching elements of the buck-boosters;
an electromagnetic wave oscillator configured to generate an electromagnetic wave upon input of predetermined voltage;
an amplifier configured to amplify the electromagnetic wave from the electromagnetic wave oscillator and supply the amplified electromagnetic wave to a resistive part which outputs the amplified electromagnetic wave; and
a detector arranged between the amplifier and the resistive part and configured to detect a reflected wave from the resistive part;
wherein the controller controls sending to one of the switching elements an operation signal in predetermined order at a timing that synchronizes with an oscillation timing of the electromagnetic wave oscillator such that a current from the corresponding buck-boosters is outputted to the amplifier in a non-smooth manner so as to supply the electromagnetic wave from the amplifier to the resistive part,
wherein
when a value of the reflected wave detected by the detector exceeds a predetermined value upon said current output by operating said one of the switching elements, the controller stops sending the operation signal to one or more of the other switching elements that are supposed to output the current after said current output by operating said one of the switching elements.

2. The electromagnetic wave oscillation device according to claim 1, wherein the controller is further configured to control the electromagnetic wave oscillator.
